# EUROPEAN PATENT APPLICATION

(11) **EP 1 747 970 A1**
(43) Date of publication of application: **31.01.2007**
(21) Application number: 06014865.7
(22) Date of filing: 17.07.2006
(51) Int. Cl.: B62D 5/04

(54) **Lock mechanism for steering ratio varying device**

(30) Priority: 28.07.2005 JP 2005218187; 24.10.2005 JP 2005308221
(71) Applicant: FUJI KIKO Co., Ltd., Kosai-shi, Shizuoka 431-0431 (JP)
(72) Inventor: Inoue, Kyoichi Fuji Kiko Co., Ltd., Kosai-shi Shizuoka 431-0431 (JP)
(74) Representative: Grünecker, Kinkeldey, Stockmair & Schwanhäusser Anwaltssozietät

(57) **Abstract**

A lock mechanism for a steering ratio varying device in which a steering ratio increase and decrease shaft is controlled by a motor through a worm gear and a worm wheel. The lock mechanism includes a lock plate mounted on a shaft of the worm gear or a shaft of the motor and having a plurality of cutout portions. Each cutout portion has a corner section. A lock member is engageable with the cutout portion of the lock plate. A lock release member has an inclined surface engageable with the corner section of the cutout portion of the lock plate to push back the lock plate by an amount corresponding to a backlash of the worm gear. An electromagnetic device includes a plunger spring and a solenoid coil. The lock member and the lock release member are engaged with the cutout portion of the lock plate by a pushing force of the plunger and disengaged from the cutout portion by an attracting force of the solenoid coil. A tight meshing between the lock plate and the lock member is prevented by the lock release member.

## Description

### BACKGROUND OF THE INVENTION

This invention relates to improvements in a lock mechanism for a steering ratio varying device in a steering system for an automotive vehicle.

Hitherto, various types of lock mechanisms for the steering ratio varying device have been proposed and put into practical use. The steering ratio varying device variably changes a steering ratio (or ratio of steering wheel rotation angle to steer angle at road wheels) in accordance with a vehicle running mode. In such steering ratio varying devices, in case that no rotational assist is applied from a motor (particularly in case that the motor is in trouble) while torque is input from a steering wheel shaft or a steering gear-side shaft, the motor is unavoidably rotated. By this, an angular shift will unavoidably occur between the steering wheel shaft and the steering gear-side shaft. In order to prevent such drawbacks, it has been proposed that the steering ratio varying device is provided with a lock mechanism.

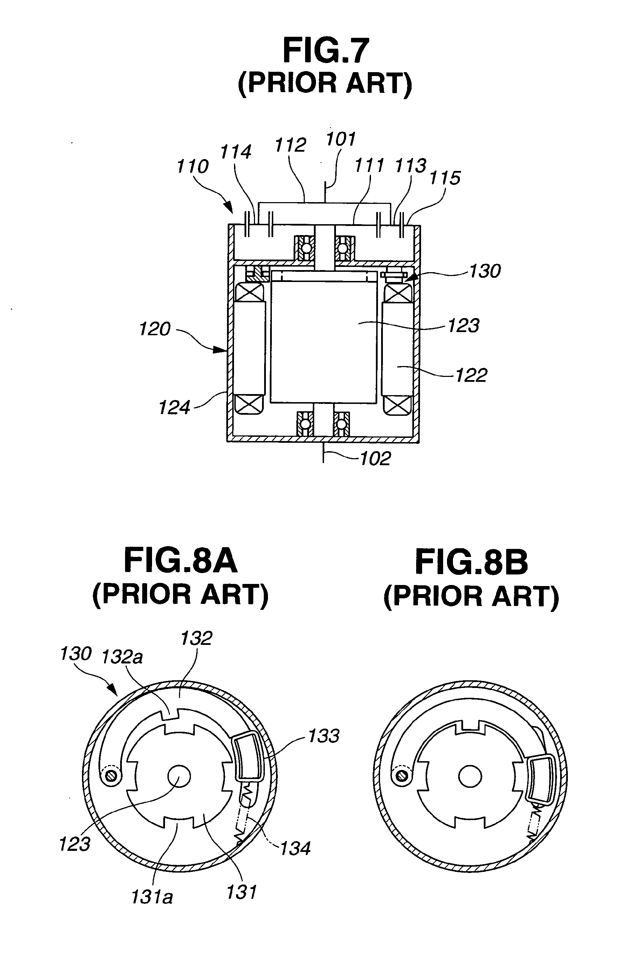

The lock mechanism for the steering ratio varying device is disclosed in Japanese Patent Provisional Publication No. 11-34894 and shown in Figs. 7, 8A and 8B. This steering ratio varying device includes a planetary gear mechanism 110 having a sun gear 111, planetary or pinion gears 113, 114 and an outer peripheral or ring gear 115. The steering ratio varying device also includes a motor 120 and a lock mechanism 130 accommodated within a motor housing 124. The sun gear 111 is mounted on a rotational shaft of a rotor 123 of the motor 120. The outer peripheral gear 115 is installed to the motor housing 124 to which a stator 122 is fixed as a single member. The planetary gears 113, 114 are supported by a carrier 112 which is connected with the steering wheel shaft thereby serving as an input shaft 101. The motor housing 124 is connected with the steering gear thereby serving as an output shaft 102.

The lock mechanism 130 includes a lock plate 131 which is fixed to the rotational shaft of the rotor 123 and formed with plurality of concave sections 131a. A lock arm 132 has one end section axially supported by the motor housing 124 and a projection section 132a which is able to be fitted with the concave section 131a of the lock plate 131. The lock arm 132 is biased toward the lock plate 131 by a spring 134. The lock arm 132 is rotationally moved by an electromagnetic coil 133 in a direction far from the lock plate 131 against the spring 134. If a steer angle deviation is not lower than a certain value, electric current applied to the electromagnetic coil 133 is interrupted so that the projection section 132a of the lock arm 132 is fitted into the concave section 131a of the lock plate 131 so as to stop the rotor 123 of the motor 120.

In this lock mechanism 130, reverse input (load) from the side of the steering gear connected to the output shaft 102 directly acts on the lock arm 132. Therefore, it is necessary to form the convex section 132a into a tightly meshing shape so as to prevent its disengagement. However, there arises a problem that the convex section 132a tends to be in tightly mesh with the concave section 131a so that a lock between the projection section 132a and the concave section 131a may not be released. In order to prevent this tight mesh, the shaft connected with the lock plate 131 is to be controlled to make its reciprocating movement in a rotational direction at the timing of the lock release so as to prevent a lock release error upon the tight mesh. This technique is disclosed in Japanese Patent Provisional Publication No. 2001-48032.

### SUMMARY OF THE INVENTION

However, the above-mentioned lock mechanism needs a control for reciprocating the lock plate in the rotational direction so that the control is complicated increasing a cost. Additionally, the projection section of the lock arm is brought into contact or hit with the concave section of the lock plate upon the reciprocating movement of the lock plate so that there arises a fear that foreign noise is generated.

In view of the above problems, it is an object of the present invention is to provide an improved lock mechanism for a steering ratio varying device, which mechanism can effectively overcome drawbacks encountered in conventional lock mechanisms for the steering ratio varying device.

Another object of the present invention is to provide a lock mechanism for a steering ratio varying device, which mechanism can release a lock between a lock member and a lock plate with a small lock release force without rotationally reciprocating the lock plate.

According to the present invention, a lock mechanism is for a steering ratio varying device in which a steering ratio increase and decrease shaft is controlled by a motor through a worm gear and a worm wheel. The lock mechanism includes a lock plate mounted on a shaft of the worm gear or a shaft of the motor and having a plurality of cutout portions each of which has a corner section. A lock member is engageable with the cutout portion of the lock plate. A lock release member has an inclined surface engageable with the corner section of the cutout portion of the lock plate to push back the lock plate by an amount corresponding to a backlash of the worm gear. An electromagnetic device includes a plunger spring and a solenoid coil. The lock member and the lock release member are engaged with the cutout portion of the lock plate by a pushing force of the plunger spring and disengaged from the cutout portion by an attracting force of the solenoid coil. A tight meshing between the lock plate and the lock member is prevented by the lock release member.

### BRIEF DESCRIPTION OF THE DRAWINGS

In the drawings, like reference numerals designate like parts and elements throughout all figures in which:
Fig. 1 is a side elevation, partly in section, of a steering ratio varying device including a first embodiment of a lock mechanism according to the present invention;
Fig. 2 is an exploded perspective view of the steering ratio varying device including the lock mechanism of Fig. 1;
Fig. 3 is a front elevation of the steering ratio varying device including the lock mechanism of Fig. 1, showing the lock mechanism being in a lock state;
Fig. 4A is a front elevation of the steering ratio varying device including the lock mechanism of Fig. 1, showing the lock mechanism being in a lock release state;
Fig. 4B is a front elevation of the steering ratio varying device including the lock mechanism of Fig. 1, showing the lock mechanism being in the lock release state under a condition where a release block is removed;
Fig. 5 is a vertical sectional view of a differential gear used in the steering ratio varying device of Fig. 1;
Figs. 6A to 6D are front elevations of the steering ratio varying device including a second embodiment of the lock mechanism according to the present invention, illustrating various operational modes of the lock mechanism;
Fig. 7 is a schematic cross-sectional view of a conventional steering ratio varying device;
Fig. 8A is a schematic illustration of a lock mechanism used in the steering ratio varying device of Fig. 7, showing an operational mode of the lock mechanism; and
Fig. 8B is a schematic illustration, similar to Fig. 8A, but showing another operational mode of the lock mechanism of Fig. 7.

The other objects and features of this invention will become understood from the following description with reference to the accompanying drawings.

### DETAILED DESCRIPTION OF THE INVENTION

Referring now to attached drawings, embodiments of a lock mechanism for a steering ratio varying device, according to the present invention will be discussed in detail.

### First Embodiment

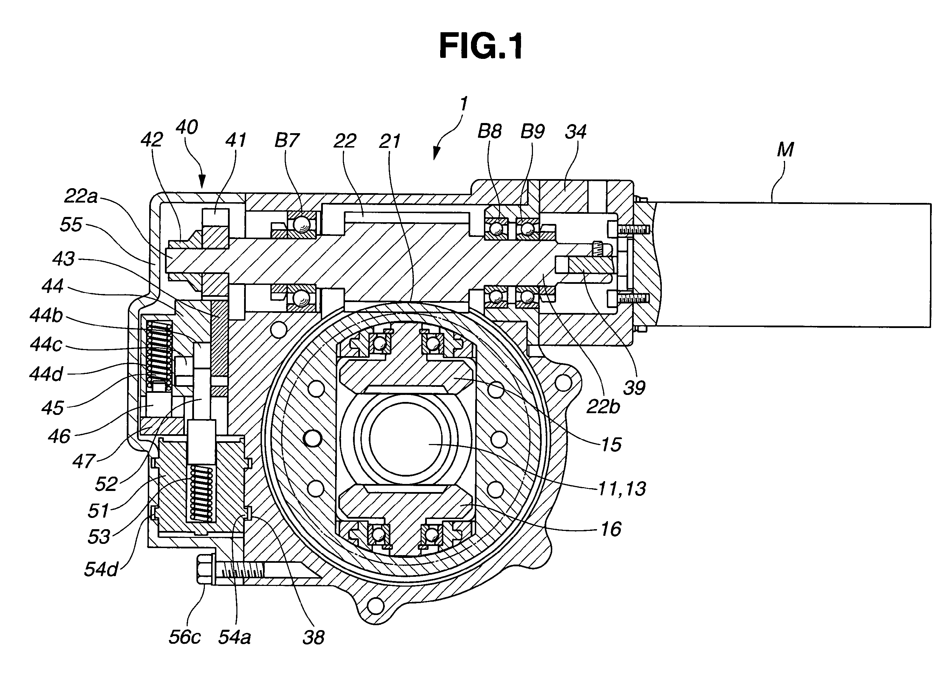

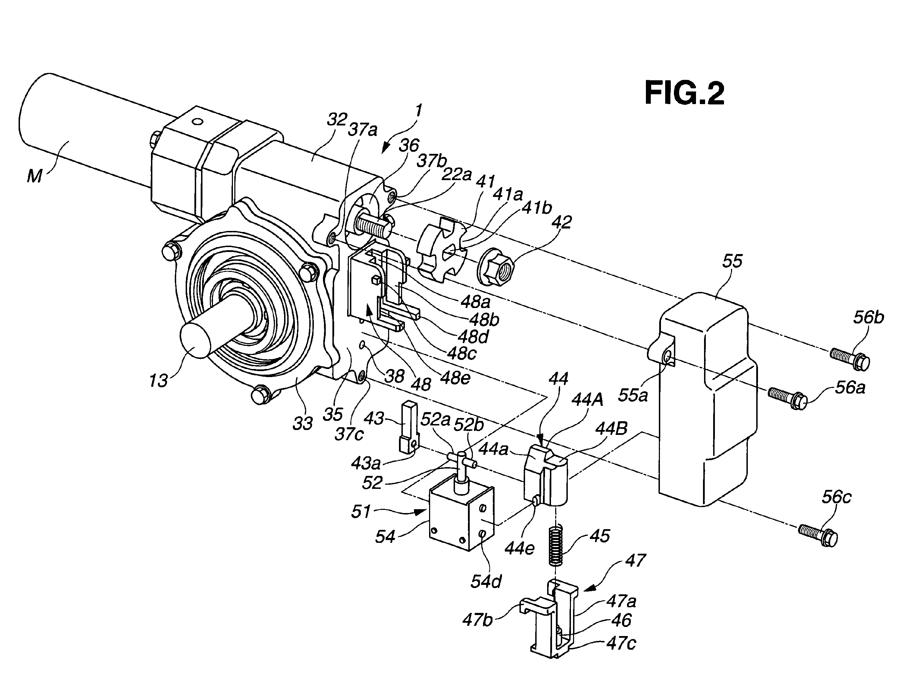

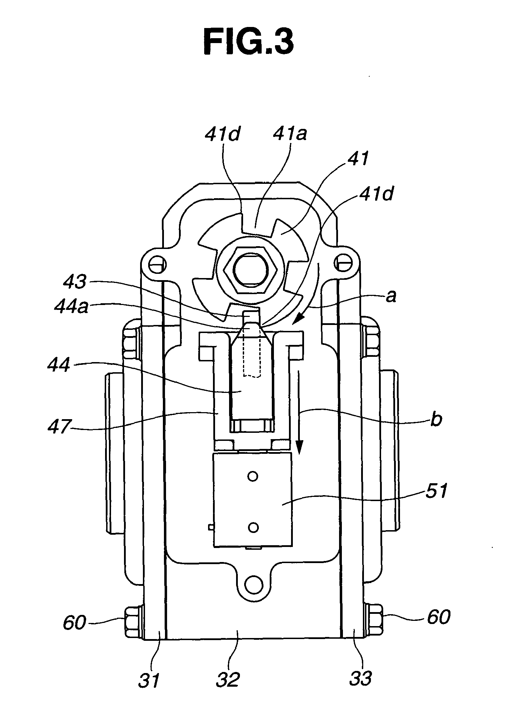

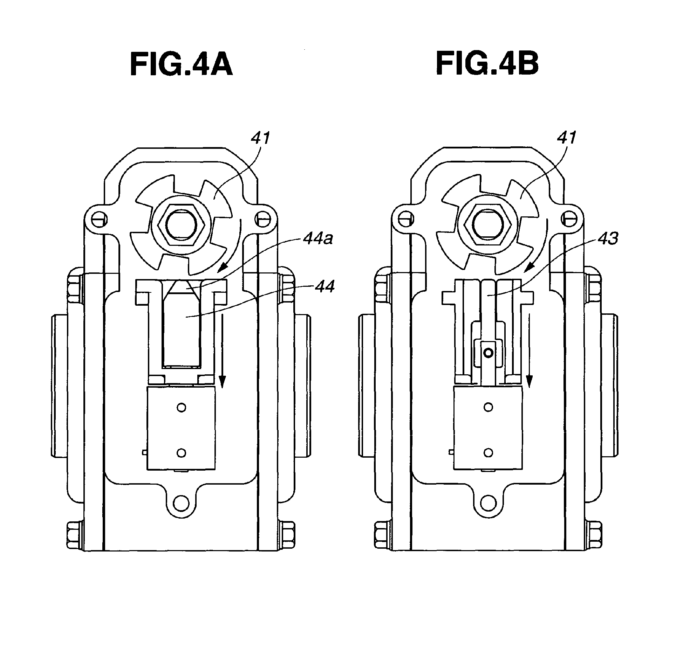

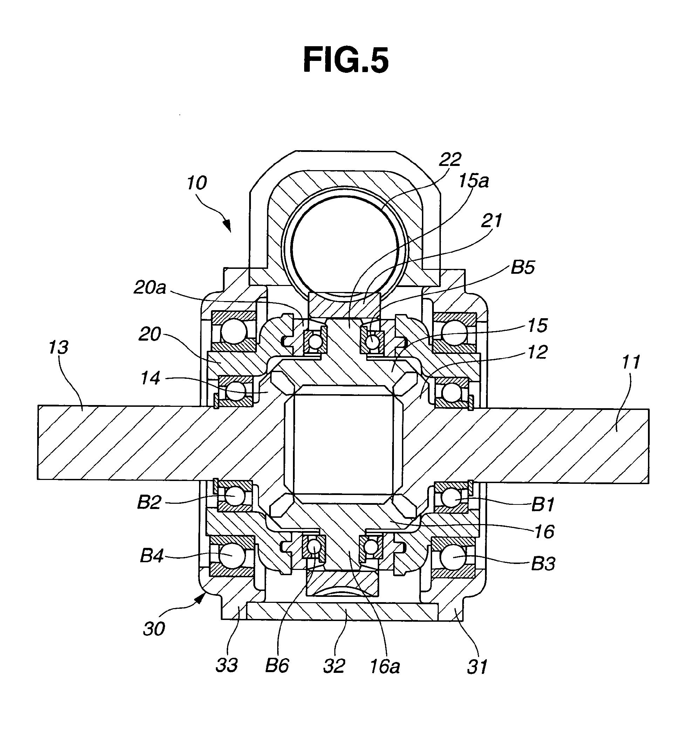

Fig. 1 illustrates a configuration of the steering ratio varying device used for an automotive vehicle. Fig. 2 is an exploded perspective view of an essential part of the steering ratio varying device. Figs. 3 illustrates a lock state of a lock mechanism for the steering ratio varying device, and Figs. 4A and 4B illustrate a lock release state of the lock mechanism. Fig. 5 illustrates a configuration of a differential gear in the steering ratio varying device. The steering ratio varying device is for varying a steering ratio which is defined as a ratio of steering wheel rotation angle to steer angle at road wheels of the vehicle. The steer angle is achieved by rotation of the road wheel about a steer rotation axis or king pin axis.

As shown in Figs. 1, 2 and 5, the steering ratio varying device 1 includes the differential gear 10 and the lock mechanism 40. The differential gear 10 includes a motor M with which a worm gear 22 is connected. The worm gear 22 is in mesh with a worm wheel 21. The lock mechanism 40 is provided for locking rotation of the worm gear 22.

In Fig. 5, the differential gear 10 includes a first bevel gear 12 serving as an input shaft 11 connected to a side of a steering wheel (not shown). A second bevel gear 14 serving as an output shaft 13 is axially aligned with the input shaft 11 and connected to a side of a steering gear or a rack and pinion gear (not shown). The first and second bevel gears 12, 14 are rotated about a first axis and in mesh with third and fourth bevel gears 15, 16 which respectively have shafts 15a, 16a which are rotated about a second axis. A plane including the second axis is perpendicular to a plane including the first axis. The shafts 15a, 16a are rotatably supported by a differential gear case 20 serving as a steering ratio increase and decrease shaft for changing or increasing and decreasing the steering ratio.

The differential gear case 20 serving as the steering ratio increase and decrease shaft is integrally provided at its outer surface with the worm wheel 21. Rotational direction of the input shaft 11 is reverse to that of the output shaft 13 so that the steering gear is connected to the output shaft 13 such that rotational direction of the steering wheel becomes the same as a steer direction of road wheels.

The worm gear 22 is located at an upper section of the differential gear 10 to rotate the worm wheel 21, and connected with the motor M. An end section or shaft 22a of the worm gear 22 is shaped generally oval in cross-section and formed at its opposite peripheral sections (through which a major axis in cross-section passes) with a thread. A lock plate 41 of the lock mechanism 40 is mounted on the end section 22a and fixed by a lock nut 42.

The differential gear case 20 is also supported by the input and output shafts 11, 13 through bearings B1, B2 which are respectively disposed on the input and output shafts 11, 13. The differential gear case 20 is also supported within a housing 30 of the differential gear 10 through bearings B3, B4 disposed within the housing 30. The shafts 15a, 16a of the third and fourth bevel gears 15, 16 are rotatably supported in a bearing supporting section 20a, respectively through the bearings B5, B6.

The housing 30 is divided into three members or first, second and third housings 31, 32, 33. The left-side first housing 31 and the right-side third housing 33 are attached to the central second housing 32 through bolts 60. The worm gear 22 is installed in the second housing 32 through bearings B7 to B9. The motor M is installed to one end side of the second housing 32 through a motor installation member 34 so as to connect a shaft 39 of the motor M to a shaft end 22b of the worm gear 22 projected from the second housing 32. As shown in Fig. 2, the other end side of the second housing 32 serves as a lock mechanism mounting section 35.

In Fig. 2, the lock mechanism mounting section 35 of the housing 30 is formed at its upper section with a hole 36 through which the end section 22a of the worm gear 22 passes, and at its lower section with a locating hole 38. Additionally, the lock mechanism mounting section 35 is formed at the left and right sections of the upper section with threaded holes 37a, 37b and at the lower section with a threaded hole 37c for the purpose of disposing a case 55 of the lock mechanism 40 to the lock mechanism mounting section 35.

The lock mechanism 40 includes the lock plate 41 which is mounted on the end section 22a of the worm gear 22. The rotation of the lock plate 41 is locked by a lock rod or a lock member 43. A lock release block or lock release member 44 is provided for releasing a tight meshing between the lock plate 41 and the lock rod 43. The lock release block 44 is upwardly biased (or biased in a direction toward the center of the lock plate 41) by a lock release spring 45. The lock release block 44 is vertically movably supported by a U-shaped (in section) frame 47. The U-shaped frame 47 is provided with a mount 46 on which the lock release spring 45 disposed in the lock release block 44 is mounted. An installation frame 48 is disposed to the lock mechanism mounting section 35 to install the lock rod 43 and the U-shaped frame 47 supporting the lock release block 44 to the second housing 32. A plunger device or electromagnetic device 51 is disposed to the lock mechanism mounting section 35 and provided to vertically move the lock rod 43. The lock mechanism 40 also includes the case 55 for covering the above component parts of the lock mechanism 40.

The lock plate 41 is formed at its outer peripheral section with four trapezoid-shaped (in section) cutout portions 41a to which the lock rod 43 can be fitted. Each cutout portion 41a defines a cutout (not identified). The lock plate 41 is also formed at its central section with an oval-shaped (in section) hole 41b to which the end section 22a of the worm gear 22 can be fitted.

The lock rod 43 is formed at its base section with a laterally elongate hole 43a to be engaged with a plunger pin 52a, so that the plunger pin 52a provided to a plunger 52 of the plunger device 51 is engaged with the elongate hole 43a. A tip end section of the lock rod 43 serves as a lock portion.

The lock release block 44 includes a lock release rod section 44A which has a ridge-shaped portion having inclined surfaces 44a, the ridge-shaped portion being located at the upper section of the lock release rod section 44A. The lock release block 44 includes a lock release spring accommodation section 44B for accommodating the lock release spring 45 therein. The lock release rod section 44A is formed such that to have a depth slightly larger than that of the cutout portion 41a of the lock plate 41. As shown in Fig. 1, the lock release rod section 44A is formed at its inside with an elongate hole 44b into which the plunger 52 is inserted, and a vertically elongate hole 44c for insertion of the plunger pin, into which the plunger pin 52b disposed to the plunger 52 is inserted. Additionally, projections 44e are formed respectively at the lower section of the opposite side surfaces of the lock release rod section 44A. The lock release spring accommodation section 44B is formed smaller in height and width than the lock release rod section 44A, and formed thereinside with a spring accommodation hole 44d for accommodating the lock release spring 45 therein, the hole 44d being opened to the lower side of the lock release spring accommodation section 44B so that the spring 45 is inserted into the hole 44d from the lower side. The lock release block 44 is formed with the vertically elongate hole 44c for insertion of the plunger pin, and therefore independently movable from the plunger 52. In a lock release state, the plunger pin 52b engages with the bottom section of the vertically elongate hole 44c so as to separate the tip end section of the lock release block 44 from the lock plate 41.

The mount 46 is disposed at the upper surface of the bottom section of the U-shaped frame 47 in such a manner to be able to compress the lock release spring 45 accommodated within the lock release block 44. The U-shaped frame 47 has opposite wall portion 47a, 47a formed such that the side surfaces of the lock release spring accommodation section 44B of the lock release block 44 are vertically movably supported by the wall portions 47a, 47a. Additionally, each wall portion 47a is provided at its upper end section with an armrest-shaped arm 47b, and cutout portions 47c, 47c are formed respectively at the opposite end sections of the lower surface of the bottom section of the U-shaped frame 47.

The installation frame 48 is formed with a lock rod guide groove 48a for vertically guiding the lock rod 43. A U-shaped frame accommodation section 48b is formed in the installation frame 48 to accommodate therein the U-shaped frame 47 supporting the lock release block 44. Projections 48c are formed respectively at the opposite side surfaces of the installation frame 48 and engaged with the armrest-shaped arms 47b of the U-shaped frame 47. Arms 48d are formed at the lower section of the installation frame 48 and arranged to support the respective cutout portions 47c located at the lower section of the U-shaped frame 47. Depressed cutout portions 48e are formed respectively at the opposite side surfaces of the installation frame 48 to restrict a vertical movement of the lock release block 44 upon engagement with the projections 44e of the lock release block 44. The installation frame 48 may be formed integral with the housing 32.

The plunger device 51 includes the plunger 52 which can be downwardly attracted upon applying electric current to a solenoid coil. A plunger spring 53 is accommodated within a plunger case 54 and upwardly biases the plunger 52. The plunger 52 is provided at its tip end section with plunger pins 52a, 52b whose axes are perpendicular to the axis of the plunger 52. The plunger case 54 is provided at its outer surface with projections 54a, 54d which are respectively engaged with the locating hole 38 formed at the housing 32 and a locating hole formed at the inner surface of the case 55 of the lock mechanism 40.

The case 55 of the lock mechanism 40 is formed with holes 55a to 55c into which case fixing bolts 56a to 56c are respectively inserted. The case fixing bolts 56a to 56c respectively correspond to threaded holes 37a to 37c formed at the second housing 32.

Hereinafter, discussion will be made on an assembly operation of the lock mechanism 40. The lock plate 41 is fitted on the end section 22a of the worm gear 22 and fixed by the lock nut 42. Subsequently, the installation frame 48 is attached to the lock mechanism mounting section 35 of the housing 32. Then, the plunger pin 52a of the plunger device 51 is fitted into the horizontally elongate hole 43a of the lock rod 43. Then, the lock rod 43 is inserted into the lock rod guide groove 48a of the installation frame 48 in a state where the lock rod 43 stands, and the plunger device 51 is attached to the lock mechanism mounting section 35 of the second housing 32.

Subsequently, the lock release block 44 accommodating the lock release spring 45 therein is installed to the U-shaped frame 47. Then, the tip end section of the plunger 52 and the plunger pin 52a of the plunger device 51 are respectively inserted into the elongate hole 44b and the vertically elongate hole 44c. Simultaneously, the arm 47b, the cutout portions 47c of the U-shaped frame 47 and the projections 44e of the lock release block 44 are respectively engaged with the projections 48c, the arms 48d and the depressed cutout portions 48e of the installation frame 48. Finally, the case 55 is attached to the lock mechanism mounting section 35 of the housing 32 and fixed by using the bolts 56a to 56c.

Next, discussion will be made on operation of the lock mechanism 40 according to the first embodiment. When an engine of an automotive vehicle is started, electric current is applied to the solenoid coil of the plunger device 51 so that the plunger 52 is attracted to the solenoid coil. Therefore, the lock rod 43 is pulled down through the plunger pin 52a and disengaged from the cutout portion 41a of the lock plate 41 thereby changing from its lock state shown in Fig. 3 to its lock release state shown in Fig. 4A. During the vehicle running, the motor M is operated in accordance with a rotation angle command corresponding to a vehicle running condition so as to rotationally control the differential gear case 20 serving as the steering ratio increase and decrease shaft. By this, a gear ratio of the differential gear 10 is variably controlled so that the road wheels are steered through the rack and pinion gear in accordance with the gear ratio of the differential gear 10 which gear ratio corresponds to the vehicle running condition, thus controlling the steering ratio in accordance with the vehicle running condition.

In case that no rotational assist or force from the motor M is applied to the differential gear case 20 upon a failure or the like of the motor M, when a rotational force or torque is applied to the differential gear 10 from the side of the input shaft 11 or that of the output shaft 13, the worm gear 22 will be rotated thereby making an angular shift between the input shaft 11 and the output shaft 13.

On the other hand, when an over-rotation (such as a runaway) of the motor M arises, the angular shift will arises regardless of the rotation angle command corresponding to the vehicle running condition.

In order to prevent such drawbacks, in case that the motor M is in trouble or in case that no correction is made by the motor M even if the angular shift is made, electric current applied to the solenoid coil of the plunger device 51 is interrupted so that the plunger 52 is restored upward by the plunger spring 53. By this, the lock rod 43 is brought into engagement with the cutout portion 41a of the lock plate 41 rotating in a direction of an arrow a so that lock between the lock rod 43 and the cutout portion 41a of the lock plate 41 is accomplished as shown in Fig. 3. At this time, a corner section 41d of the cutout portion 41a is brought into contact with the inclined surface 44a of the lock release block 44 so that the lock release block 44 is pushed back in a direction of an arrow b against the biasing force of the lock release spring 45. When the force for rotating the lock plate 41 is disappeared, the inclined surface 44a of the lock release block 44 biased in a direction opposite to the direction of the arrow b by the lock release spring 45 pushes the corner section 41d of the cutout portion 41a in a direction opposite to the direction of the arrow a so that the lock plate 41 is pushed back by an amount corresponding to a backlash of the worm gear 22. By this, a clearance is formed in a meshing section between the lock plate 41 and the lock rod 43 so as to prevent generation of the tight meshing for the lock so that the lock rod 43 can be easily disengaged from the lock plate 41. As a result, release of the lock can be accomplished with a light attracting force generated by the solenoid coil. Additionally, it is not necessary to reciprocate the lock plate 41 so that an extra control is unnecessary while preventing generation of foreign noise.

While the differential gear including the bevel gears has been shown and described as being used as the gear ratio varying device of the steering system in the above first embodiment, it will be understood that the differential gear including the bevel gears is an example of the gear ratio varying device, and therefore the gear ratio varying device of the present invention is not limited to one using the differential gear including the bevel gears. Further, although the lock release spring 45 has been shown and described as being disposed inside the lock release block 44, it will be appreciated that it may be disposed outside the lock release block 44.

### Second Embodiment

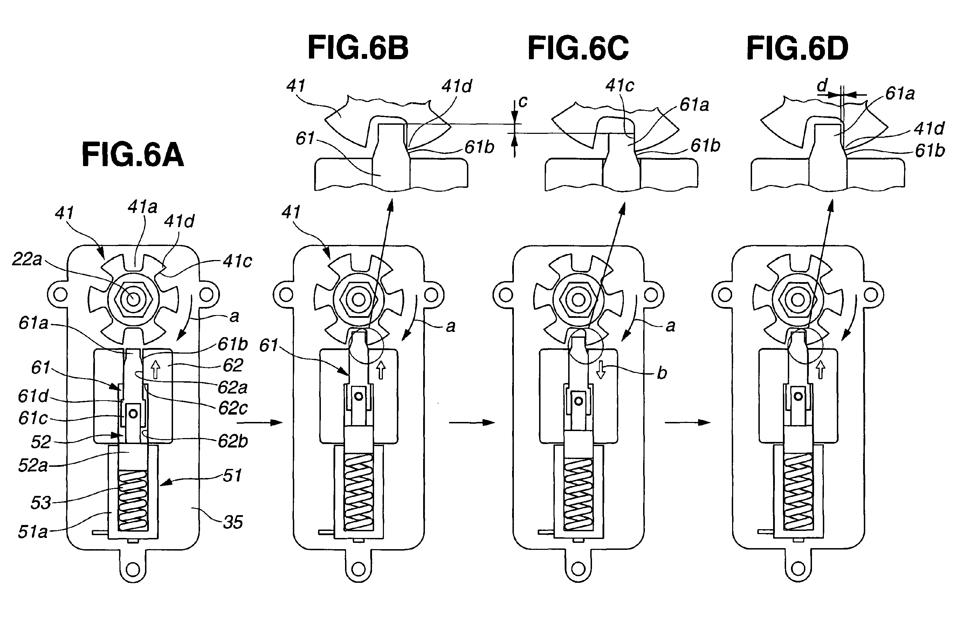

Figs. 6A to 6D illustrate an operation of a second embodiment of the lock mechanism according to the present invention, similar to the first embodiment. This lock mechanism includes a lock plate 41 formed with six trapezoidal (in section) cutout portions 41a and fixed to an end section 22a of a worm gear 22 of a steering ratio varying device. A plunger device 51 is disposed to a lock mechanism mounting section 35 of the steering ratio varying device. A lock rod 61 is connected to a tip end section of a plunger 52. A lock rod guide frame 62 is attached to the lock mechanism mounting section 35 of the steering ratio varying device.

The plunger device 51 includes a solenoid coil 51a which accommodates therein an attracted portion 52a and a plunger spring 53. The plunger 52 is connected to the attracted portion 52a and downwardly attracted by the solenoid coil 51a and upwardly biased by the plunger spring 53.

The lock rod 61 includes a lock portion 61a forming a tip end section of the lock rod 61 and being generally in the shape of a rectangular parallelepiped so as to have parallel side walls (not identified) contactable with the lock plate 41. The lock portion 61a has a width (or distance between the parallel side walls) slightly smaller than that of the cutout portion 41a. An inclined surface portion or lock release portion 61b serving as a lock release member for releasing the lock is formed below and integral with the lock portion 61a so as to be a base section of the lock portion 61a. In other words, the lock portion 61a is formed integral with and located on the top of the lock release portion 61b. The lock release portion 61b has roof-shaped inclined surfaces (not identified) which are respectively contiguous with the side walls of the lock portion 61a and symmetrical with each other, in which each inclined surface extends outwardly in a direction far from the lock portion 61a. A base portion 61c forming a lower end section of the lock rod 61 is formed slightly larger in width than other parts of the lock rod 61.

The lock rod guide frame 62 is formed with a lock rod guide groove 62a for guiding the lock rod 61 and a plunger guide groove 62b in which the base portion or connecting section 61c of the lock rod 61 and the attracted portion 52a are vertically movable. The attracted portion 52a is attracted under the magnetic force of the solenoid coil 51a.

As shown in Fig. 6A, when electric current is applied to the solenoid coil 51a so that the plunger 52 is pulled down, an upper surface of the tip end section of the lock rod 61 is located generally flush with an upper end surface of the lock rod guide frame 62. In contrast, when the electric current is not applied to the solenoid coil 51a, the plunger 52 is biased by the plunger spring 53, as shown in Fig. 6B. By this, the plunger 52 is pushed to a position where a shoulder portion 61d of the base portion 61c of the lock rod 61 is engaged with a step portion 62c located at a boundary between a hole or lock rod guide groove 62a and a hole or plunger guide groove 62b. Consequently, the lock portion 61a of the lock rod 61 enters the cutout portion 41a of the lock plate 41, while the inclined surface of the inclined surface portion 61b pushes a corner section 41d of the cutout portion 41a. Additionally, the length of the lock portion 61a of the lock rod 61 is so set that the tip end section of the lock portion 61a cannot contact with a round bottom corner of the bottom section of the cutout portion 41a of the lock plate 41.

Hereinafter, discussion will be made on an operation of the lock mechanism according to the second embodiment. When an engine of an automotive vehicle is started, the electric current is applied to the solenoid coil 51a of the plunger device 51 so that the plunger 52 is pulled down under the attraction force of the solenoid coil 51a. Therefore, the lock portion 61a of the lock rod 61 connected with the plunger 52 is disengaged from the cutout portion 41a of the lock plate 41 thereby establishing a lock release state as shown in Fig. 6A.

During the automotive vehicle running, in case that the motor M is in trouble or in case that no correction is made by the motor M even if the angular shift arises, an abnormality is detected so that the electric current applied to the solenoid coil 51a of the plunger device 51 is interrupted. By this, the lock rod 61 is biased by the plunger spring 53 and upwardly pushed thereby engaging with the cutout portion 41a of the lock plate 41 rotating in a direction of an arrow a so as to lock the shaft of the worm gear or the motor, as shown in Fig. 6B. At this time, the corner section 41d of the cutout portion 41a is brought into contact with the inclined surface of the inclined surface portion 61b of the lock rod 61 so that the lock rod 61 temporarily escapes or moves in a direction of an arrow b to a position where the inclined surface portion 61b disengages from the corner section 41d (by a distance c in Figs. 6B and 6C) against the biasing force of the plunger spring 53 as shown in Fig. 6C.

After completion of the lock, when torque of the motor M is disappeared, the lock rod 61 biased by the plunger spring 53 is pushed in a direction opposite to a direction indicated by the arrow b so that the inclined surface of the inclined surface portion 61b of the lock rod 61 pushes the corner section 41d of the cutout portion 41a in a direction opposite to a direction of an arrow a. By this, the lock plate 41 is pushed back by an amount corresponding to a backlash of the worm gear 22, as shown in Fig. 6D. Consequently, a clearance d is formed in a mesh section between the lock plate 41 and the lock rod 61 so as to prevent a tight meshing in the lock so that the lock portion 61a of the lock rod 61 can be easily disengaged from the lock plate 41. As a result, the release of the lock is accomplished with a small attracting force generated by the solenoid coil 51a. Additionally, it is not necessary to reciprocate the lock plate 41 as conventionally done, so that an extra control is not required while no abnormal noise is produced.

As discussed above, discussion has been made on the preferable embodiments for carrying out the present invention. The invention is not limited to the embodiments described above. Modifications and variations of the embodiment described above will occur to those skilled in the art, in light of the above teachings.

As appreciated from the above, according to the present invention, when the lock member is engaged with the cutout portion so as to accomplish the lock, the inclined surface of the lock release member is contacted to the corner section of the cutout portion of the lock plate so that the lock release member is pushed back upon the force of the lock plate being not completely stopped. When the force for rotating the lock plate is disappeared, the inclined surface of the lock release member pushes back the lock plate by an amount corresponding to the backlash of the worm gear. By this, a clearance is produced at the engaging section between the lock plate and the lock member. Therefore, establishing the tight meshing in the lock is prevented so that the lock member can be easily disengaged.

Since the lock release member including the inclined surface portion is disposed in addition to the lock member, establishing the tight meshing in the lock is prevented and the lock member can be easily disengaged. Therefore, a lock release can be securely accomplished with the small lock release force. Additionally, it is not necessary to carry out a control for reciprocating the lock plate in a rotational direction. This control has been conventionally carried out for releasing the lock. Therefore, the control is simplified, avoiding the fear of generation of foreign noise upon the reciprocating movement of the lock plate.

The entire contents of Japanese Patent Applications No. 2005-218187, filed July 28, 2005 and No. 2005-308221, filed October 24, 2005 are incorporated by reference.

## Claims

1. A lock mechanism for a steering ratio varying device in which a steering ratio increase and decrease shaft is controlled by a motor through a worm gear and a worm wheel, the lock mechanism comprising:
a lock plate mounted on a shaft of the worm gear or a shaft of the motor and having a plurality of cutout portions, each cutout portion having a corner section;
a lock member engageable with the cutout portion of the lock plate;
a lock release member having an inclined surface engageable with the corner section of the cutout portion of the lock plate to push back the lock plate by an amount corresponding to a backlash of the worm gear; and
an electromagnetic device including a plunger spring and a solenoid coil, the lock member and the lock release member being engaged with the cutout portion of the lock plate by a pushing force of the plunger spring and disengaged from the cutout portion by an attracting force of the solenoid coil,
wherein a tight meshing between the lock plate and the lock member is prevented by the lock release member.

2. A lock mechanism for a steering ratio varying device as claimed in Claim 1, further comprising a lock rod having a tip end section serving as the lock member engageable with the cutout portion of the lock plate, and a base section connected with a lower end of the tip end section and having an inclined surface serving as the lock release member, wherein the inclined surface pushes the corner section of the cutout portion of the lock plate while the lock rod is pushed by a pushing force of the plunger spring of the electromagnetic device.

3. A lock mechanism for a steering ratio varying device as claimed in Claim 1, wherein the lock member is a lock rod having a tip end section serving as the lock member engageable with the cutout portion of the lock plate; wherein the lock release member is a lock release block having an inclined surface at a tip end section of the lock release block and a lock release spring biasing the lock release block in a direction toward the lock plate; wherein the lock rod is connected with a plunger of the electromagnetic device; wherein the lock release block is connected with the plunger of the electromagnetic device to be axially movable by a distance against a biasing force of the lock release spring; wherein the lock release block pushes the corner section of the cutout portion of the lock plate by the biasing force of the lock release spring while the lock rod and the lock release block are pushed by the pushing force of the plunger spring of the electromagnetic device.
